# EUROPEAN PATENT APPLICATION

(11) **EP 4 404 338 A1**
(43) Date of publication of application: **24.07.2024**
(21) Application number: 23866679.6
(22) Date of filing: 29.08.2023
(51) Int. Cl.: H01M 50/102

(54) **ELECTROCHEMICAL DEVICE AND ELECTRONIC DEVICE**

(30) Priority: 05.12.2022 CN 202211546439
(71) Applicant: Ningde Amperex Technology Limited, Zhangwan Town, Jiaocheng District Ningde City Fujian 352100 (CN)
(72) Inventor: YANG, Jianhui, Ningde Fujian 352100 (CN); LIU, Ning, Ningde Fujian 352100 (CN); ZHANG, Guowen, Ningde Fujian 352100 (CN)
(74) Representative: Klunker IP Patentanwälte PartG mbB
(86) International application number: PCT/CN2023/115592
(87) International publication number: WO 2024/119911

(57) **Abstract**

This application discloses an electrochemical apparatus and an electronic apparatus. The electrochemical apparatus includes a housing, an electrode assembly, a first tab, and a pole assembly. The housing includes a main body and a first protruding portion, the main body is provided with a first cavity, the first protruding portion is provided with a second cavity and a first through hole, the first through hole and the first cavity both communicate with the second cavity, the pole assembly is disposed in the first through hole, the pole assembly is insulated from the housing, the electrode assembly is accommodated in the first cavity, one end of the first tab is connected to the electrode assembly, and another end of the first tab extends into the second cavity and is connected to the pole assembly. The main body includes a first top wall, and the first protruding portion includes a second top wall, where the first top wall protrudes from the second top wall, and the first through hole is provided in the second top wall. By this means, space utilization of the electrochemical apparatus can be improved.

## Description

### TECHNICAL FIELD

This application relates to the field of electrochemical apparatus technologies, and particularly, to an electrochemical apparatus and an electric apparatus.

### BACKGROUND

Thin batteries, due to their low power consumption, long cycle life, and high degree of customization, are widely used in the field of the Internet of Things or smart wearables. Generally, total thickness of a battery is approximately equal to a sum of thicknesses of packaging materials on both sides, positive and negative electrode plates, and a separator. In order to reduce the thickness of a battery, an electrode assembly made of positive and negative electrode plates coated with active material on one surface and a single-layer separator is typically used in related art to reduce the total thickness of the battery. However, restricted by the structural design, the circuit board and the portion where the pole is located are located on different planes of the battery. This requires separate avoidance design for the pole or the circuit board during subsequent overall design of the electric apparatus, reducing space utilization of the electrochemical apparatus.

### SUMMARY

In view of the deficiencies in the related art, an objective of this application is to provide an electrochemical apparatus and an electric apparatus to improve space utilization of the electrochemical apparatus.

According to a first aspect of this application, an electrochemical apparatus is provided, including a housing, an electrode assembly, a first tab, and a pole assembly. The housing includes a main body and a first protruding portion, the main body is provided with a first cavity, the first protruding portion is provided with a second cavity and a first through hole, and the first through hole and the first cavity both communicate with the second cavity. The pole assembly is disposed in the first through hole, the pole assembly is insulated from the housing, the electrode assembly is accommodated in the first cavity, one end of the first tab is connected to the electrode assembly, and another end of the first tab extends into the second cavity and is connected to the pole assembly. The main body includes a first top wall, and the first protruding portion includes a second top wall, where the first top wall protrudes from the second top wall, and the first through hole is provided in the second top wall.

In some implementations of this application, a distance between two ends of the first protruding portion in a thickness direction of the main body is 1.00 mm to 3.00 mm.

In some implementations of this application, a distance between two ends of the first protruding portion in a width direction of the main body is 3 mm to 25 mm.

In some implementations of this application, a distance between two ends of the first protruding portion in a length direction of the main body is 3 mm to 6 mm.

In some implementations of this application, the main body further includes a first bottom wall, and along a thickness direction of the main body, the first bottom wall is disposed opposite the first top wall.

The first protruding portion further includes a second bottom wall, and along the thickness direction of the main body, the second bottom wall is disposed opposite the second top wall, and the second bottom wall is flush with the first bottom wall.

In some implementations of this application, the first side wall of the housing includes a first zone and a second zone, the first side wall extends along the length direction of the main body to form the first protruding portion, and the first protruding portion and the second zone form an accommodating space.

The electrochemical apparatus further includes a circuit board, where the circuit board is fixed in the accommodating space, and the circuit board is provided with a first electrical connection portion configured in such a way that a side closer to the first protruding portion extends out of the circuit board, where the first electrical connection portion is electrically connected to the pole assembly, and the first electrical connection portion is arranged between the first top wall and the second top wall.

In some implementations of this application, the circuit board is provided with a second electrical connection portion, and the electrochemical apparatus further includes a second tab, where one end of the second tab is electrically connected to the electrode assembly, and another end of the second tab and the second electrical connection portion are both electrically connected to the housing.

In some implementations of this application, the second electrical connection portion is electrically connected to an outer surface of the first protruding portion, and a connection point between the first protruding portion and the second electrical connection portion and the first through hole are both located on a same side of the first protruding portion.

In some implementations of this application, a second protruding portion also extends along the length direction of the main body from the second zone, and along a width direction of the main body, the first protruding portion and the second protruding portion are located at two ends of the first side wall, and the circuit board is located between the first protruding portion and the second protruding portion.

In some implementations of this application, the pole assembly includes a pole, a connecting member, and an adhesive layer sandwiched between the pole and the connecting member. The connecting member is fixed to the first protruding portion, the pole is provided with a first end portion and a connecting portion, where the first end portion is located outside the first protruding portion, the first end portion is electrically connected to the circuit board, one end of the connecting portion is connected to the first end portion, and another end of the connecting portion sequentially runs through the adhesive layer, the connecting member, and the first through hole to connect to another end of the first tab, and there is a gap between an outer periphery of the connecting portion and wall surface of the first through hole.

In some implementations of this application, the pole assembly includes a pole, a first insulation gasket, and a second insulation gasket. The pole is provided with a first end portion, a connecting portion, and a second end portion, where the first end portion is located outside the first protruding portion and is electrically connected to the circuit board, the second end portion is located inside the second cavity and is electrically connected to the electrode assembly, and the connecting portion runs through the first through hole and is connected to the first end portion and the second end portion; and under a contraction effect of the first end portion and the second end portion, the first insulation gasket is sandwiched between the first end portion and the first protruding portion, and the second insulation gasket is sandwiched between the second end portion and the second protruding portion, where the first insulation gasket insulates the first protruding portion from the connecting portion.

In some implementations of this application, the pole assembly further includes a metal gasket, where the metal gasket is sandwiched between the first end portion and the first insulation gasket.

In some implementations of this application, the electrochemical apparatus further includes a first insulation member and a second insulation member, where the first insulation member and the second insulation member are both provided on inner wall surface of the first protruding portion.

Along a thickness direction of the electrochemical apparatus, the first tab is located between the second insulation member and the first insulation member.

In some implementations of this application, the first protruding portion is further provided with a second through hole, and the second through hole communicates with the second cavity.

The electrochemical apparatus further includes an injection plug, and the injection plug is provided in the second through hole.

According to another aspect of this application, an electric apparatus is provided, including the foregoing electrochemical apparatus.

### BRIEF DESCRIPTION OF DRAWINGS

One or more embodiments are used as examples for description by using corresponding accompanying drawings. These example descriptions impose no limitation on some embodiments. Elements with a same reference sign in the accompanying drawings represent similar elements. Unless otherwise stated, sizes in the accompanying drawings impose no limitation on a scale.
FIG. 1 is a schematic structural diagram of an electrochemical apparatus according to an embodiment of this application;
FIG. 2 is an exploded view of a structure of the electrochemical apparatus shown in FIG. 1;
FIG. 3 is a sectional view along line A-A in the electrochemical apparatus shown in FIG. 1;
FIG. 4 is a schematic structural diagram of an electrochemical apparatus according to another embodiment of this application;
FIG. 5 is a schematic structural diagram of an electrochemical apparatus according to still another embodiment of this application;
FIG. 6 is an exploded view of a structure of the electrochemical apparatus shown in FIG. 5;
FIG. 7 is a sectional view along line B-B in the electrochemical apparatus shown in FIG. 5; and
FIG. 8 is a schematic structural diagram of an electrochemical apparatus according to yet another embodiment of this application.

### DESCRIPTION OF EMBODIMENTS

The following clearly and completely describes technical solutions in some embodiments of this application with reference to the accompanying drawings in these embodiments of this application. Apparently, the described embodiments are only some but not all of these embodiments of this application. The following description of at least one exemplary embodiment is merely illustrative and definitely is not construed as any limitation on this application or on use of this application.

In the description of this application, it should be noted that the orientations or positional relationships indicated by the terms such as "front, rear, up, down, left, right", "transverse, longitudinal, perpendicular, horizontal", "top, bottom", and the like are based on the orientations or positional relationships shown in the accompanying drawings, are merely intended to facilitate the descriptions of this application and simplify the descriptions, are not intended to indicate or imply that the apparatuses or components mentioned in this application must have specific orientations, or be constructed and operated for a specific orientation, and therefore shall not be construed as any limitation on this application; and the terms "inner" and "outer" refer to inside and outside of the contour of the respective components themselves.

In the description of this application, it should be noted that the use of words "first", "second" and the like to define parts is merely intended to distinguish between the respective parts, and unless otherwise specified, the words have no special meaning and therefore are not construed as any limitation on the protection scope of this application.

The electrochemical apparatus in this application can be any apparatus capable of undergoing electrochemical reactions, such as a primary battery or a secondary battery. For example, the secondary battery may be a lithium secondary battery such as a lithium metal secondary battery, a lithium-ion secondary battery, a lithium polymer secondary battery, a solid-state battery, or a lithium-ion polymer secondary battery.

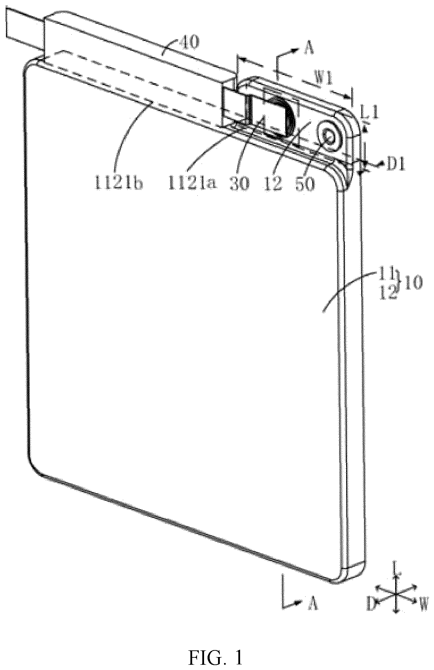

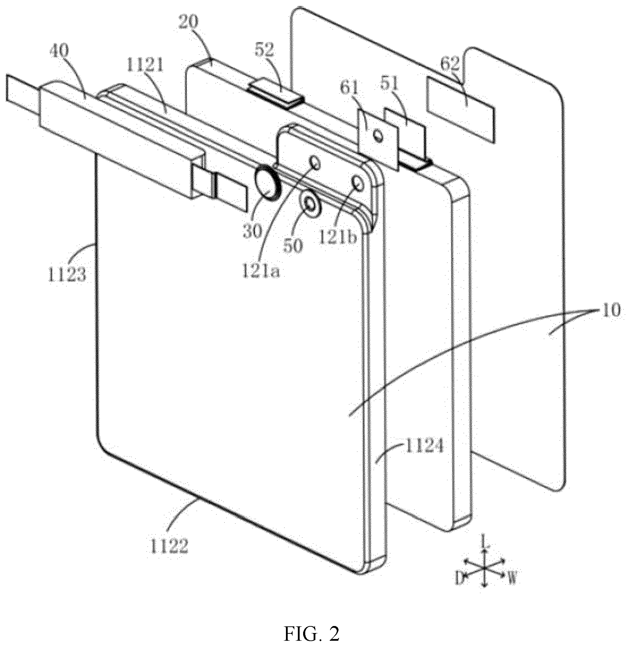

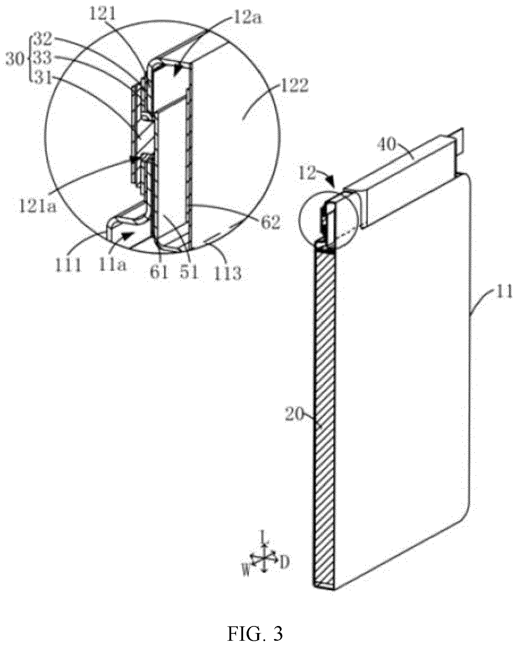

FIG. 1 is a schematic structural diagram of an electrochemical apparatus according to an embodiment of this application. FIG. 2 is an exploded view of a structure of the electrochemical apparatus shown in FIG. 1. FIG. 3 is a sectional view along line A-A in the electrochemical apparatus shown in FIG. 1. With reference to FIG. 1 to FIG. 3, the electrochemical apparatus includes a housing 10, an electrode assembly 20, a first tab 51, a second tab 52, a pole assembly 30, and a circuit board 40. The housing 10 serves as a mounting and supporting structure for the aforementioned components. The pole assembly 30 is mounted on the housing 10 and insulated from the housing 10. The electrode assembly 20 is accommodated inside the housing 10, the first tab 51 is electrically connected to the electrode assembly 20 and the pole assembly 30, and the second tab 52 is electrically connected to the electrode assembly 20 and the housing 10. The circuit board 40 is fixed on the housing 10. The circuit board 40 is electrically connected to the pole assembly 30 and the housing 10. The circuit board 40 is configured to be electrically connected to a load of the electric apparatus to provide electrical energy to the load of the electric apparatus; or the circuit board 40 is configured to be electrically connected to a power supply apparatus to supplement electrical energy to the electrode assembly 20. In addition, the circuit board 40 can protect the electrochemical apparatus, for example, it can protect the electrochemical apparatus from overdischarge, overcharge, and overcurrent, and implement output short circuit protection. Further, the electrochemical apparatus may further include an electrolyte, and the electrolyte is filled inside the housing 10, allowing the electrode assembly 20 to be immersed in the electrolyte.

In order to clearly describe orientations in the following description, the coordinate system in FIG. 1 is used to define the directions. Coordinate axis W represents a first direction, which is a direction in which a third side wall 1123 and a fourth side wall 1124 of the housing 10 are disposed opposite each other, parallel to a plane on which the electrochemical apparatus is located, and also a width direction of the main body of the electrochemical apparatus. Coordinate axis L represents a second direction, which is a direction in which a first side wall 1121 and a second side wall 1122 of the main body 11 are disposed opposite each other, parallel to the plane on which the electrochemical apparatus is located, and also a length direction of the main body of the electrochemical apparatus. Coordinate axis D represents a third direction, which is a direction in which a first top wall 111 and a first bottom wall 113 of the main body 11 are disposed opposite each other, is also a stacking direction of the electrode plates in the electrode assembly 20, as well as a thickness direction of the main body of the electrochemical apparatus, and is perpendicular to the plane on which the electrochemical apparatus is located. In other words, any two of the coordinate axes D, L, and W are perpendicular to each other.

Based on the foregoing orientations, specific structures of a housing 10, an electrode assembly 20, and a pole assembly 30 are described in detail with reference to the illustrated embodiments. The terms "up", "down", "top", "bottom", and the like used to indicate orientations or positional relationships, are relative to the third direction. Unless conflicting, technical features involved in different embodiments described below can be combined with each other.

Regarding the foregoing housing 10, the housing 10 can be made of a conductive metal material such as steel or steel alloy, and has a corrosion-resistant coating inside to withstand complex working conditions such as high temperature, high pressure, and high corrosion inside the housing 10. Refer to FIG. 2 and FIG. 3. In some embodiments of this application, the housing 10 is substantially in a shape of a flat square and includes a main body 11 and a first protruding portion 12. The first protruding portion 12 and the main body 11 together define an accommodating space (not shown) for accommodating the circuit board 40.

The main body 11 is provided with a first top wall 111, a first bottom wall 113, and a first frame (not shown) formed by bending and extending from the first top wall 111 along the periphery of the first top wall 111. The first frame includes a first side wall 1121, a second side wall 1122, a third side wall 1123, and a fourth side wall 1124 that are sequentially connected end to end. The first side wall 1121 and the second side wall 1122 are disposed opposite each other, and the third side wall 1123 and the fourth side wall 1124 are disposed opposite each other. The first protruding portion 12 is located at one end of the first side wall 1121 along the first direction W. The first protruding portion 12 is formed by extending from the first side wall 1121 along a direction (the second direction L) toward the outside of the main body 11.

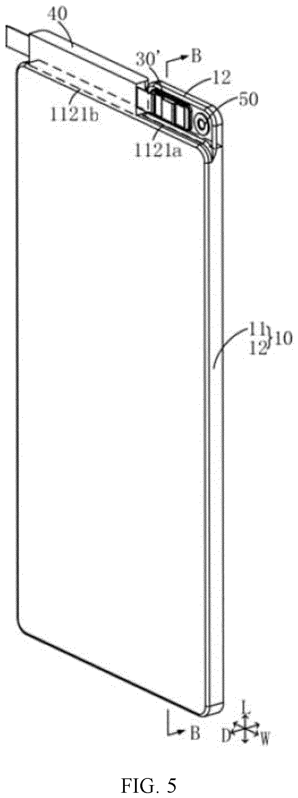

The first protruding portion 12 is provided with a second top wall 121, a second bottom wall 122, and a second frame (not shown) formed by bending and extending from the second top wall 121 along the periphery of the second top wall 121. The second top wall 121 is formed by bending the first side wall 1121 of the main body 11 in the first zone 1121a of the first side wall 1121 along the first direction W and then bending and extending along the direction (the second direction L) toward the outside of the main body 11. That is, the second top wall 121, the first frame, the first top wall 111 of the main body, and the first frame of the main body form an integral structure. The second bottom wall 122 is formed by extending a portion of the first bottom wall 113 of the main body along the direction toward the outside of the main body 11. That is, the second bottom wall 122 and the first bottom wall 113 of the main body 11 form an integral structure. Except that thickness of the first protruding portion 12 of the housing 10 is smaller than thickness of the main body 11 and a size of the first protruding portion 12 is smaller than the size of the main body 11, there are no other differences in their structures. An end surface of the first frame farther away from the first top wall 111 can be attached to the first bottom wall 113 by, but not limited to, adhering, gluing, welding, mechanical fastening, or coupling, so as to define, together with the first bottom wall 113, a first cavity 11a for sealing the electrode assembly 20. An end surface of the second frame farther away from the second top wall 121 can be connected to the second bottom wall 122 using the same connection methods, so as to define, together with the second bottom wall 122, a second cavity 12a for accommodating a first tab 51. The second zone 1121b of the first side wall 1121 of the main body 11, along with the second frame of the first protruding portion 12, encloses the foregoing accommodating space. The first zone 1121a and the second zone 1121b are sequentially arranged along the first direction W. It should be understood that the specific structure of the housing 10 is not limited thereto. For example, in some other embodiments of this application, the housing 10 can be of a flat rectangular shape shown in FIG. 5, or a cube, cylinder, prism, pyramid, or other regular shapes, depending on a specific shape of the electrode assembly 20 accommodated in the housing 10. In addition, in some other embodiments of this application, the first protruding portion 12 can alternatively be disposed on a side wall other than the first side wall 1121 of the first frame. Further, in some other embodiments of this application, the thickness of the first protruding portion 12 can be the same as the thickness of the main body 11. These are not further described herein.

Still refer to FIG. 2. The second top wall 121 of the first protruding portion 12 is provided with a first through hole 121a and a second through hole 121b, both of which are in communication with the second cavity 12a. The first through hole 121a is used for installing the pole assembly 30 to be described below. The second through hole 121b may serve as an electrolyte injection hole. During an electrolyte injection process of the electrochemical apparatus, through an electrolyte injection head of an electrolyte injection device, the electrolyte is injected into the second cavity 12a via the second through hole 121b, and then flows into the first cavity 11a of the main body 11, thereby immersing the electrode assembly 20 accommodated in the first cavity 11a. After the electrolyte injection process is completed, the second through hole 121b should be sealed with an injection plug 50 to prevent leakage of the electrolyte from the housing 10. The injection plug 50 can be adhered, glued, welded, or coupled to the second top wall 121 of the first protruding portion 12 to form an airtight seal. Certainly, when the electrode assembly 20 can still conduct electrons between the positive and negative electrodes without relying on the electrolyte, the second through hole 121b and the injection plug 50 may not be provided based on actual use requirements. This further improves the sealing of the housing 10 and helps maintain stable operation of the electrode assembly 20.

Further, along the first direction W, the first through hole 121a and the second through hole 121b are spaced apart on a same surface of the second top wall 121. During an assembly process of the electrochemical apparatus, the number of times of turning over the electrochemical apparatus can be reduced, and the installation of the pole assembly 30 and the electrolyte injection operation can be completed together, thereby improving assembly efficiency of the electrochemical apparatus. Further, the second through hole 121b is closer to one side of the fourth side wall 1124 of the main body 11 than the first through hole 121a. In other words, the first through hole 121a is adjacent to the accommodating space of the housing 10, and the pole assembly 30 is disposed at the first through hole 121a. After the circuit board 40 is fixed in the accommodating space of the housing 10, the electrical connection between the circuit board 40 and the pole assembly 30 may block the zone between them. Since the second through hole 121b is far away from the first through hole 121a, the second through hole 121b is less likely to be blocked by the blocked zone. That is, the second through hole 121b can always be exposed on the second top wall 121 of the first protruding portion 12, facilitating subsequent electrolyte replenishment process of the electrochemical apparatus.

Regarding the foregoing electrode assembly 20, the electrode assembly 20 is accommodated within the second cavity 12a of the main body 11 and is insulated from the inner surface of the main body 11. Refer to FIG. 2 and FIG. 3. In some embodiments of this application, the electrode assembly 20 includes at least one first electrode plate (not shown in the figure), at least one second electrode plate (not shown in the figure), and a separator (not shown in the figure) that separates the first electrode plate and the second electrode plate. The first electrode plate and the second electrode plate have opposite polarities. Along the third direction D, a first electrode plate, a separator, and a second electrode plate are alternately stacked to form a laminated structure. The blank current collector of each first electrode plate extends beyond the laminated structure from one end of the laminated structure closer to the first protruding portion 12 and is electrically connected to one end of the first tab 51. Another end of the first tab 51 extends into the first cavity 11a of the first protruding portion 12 after multiple bends and is then spot-welded, laser-welded, or ultrasonically welded to the pole assembly 30. The first tab 51 can be made of a metal conductive material such as aluminum, and thus, each first electrode plate can be a positive electrode plate. The blank current collector of each second electrode plate extends beyond the laminated structure from one end of the laminated structure closer to the first side wall 1121 of the main body 11 and is electrically connected to one end of the second tab 52. Another end of the second tab 52 is bent and then spot-welded, laser-welded, or ultrasonically welded to the first side wall 1121 of the housing 10. The second tab 52 can be made of a metal conductive material such as copper or nickel, and thus, each second electrode plate can be a negative electrode plate. It should be understood that a specific structure of the electrode assembly 20 is not limited. For example, in some other embodiments of this application, the electrode assembly 20 can alternatively be a wound electrode assembly 20. In addition, there are various options for the first electrode plate and the second electrode plate in the electrode assembly 20. For example, the first electrode plate and the second electrode plate may be current collectors coated with an active material layer on one side or current collectors coated with active material layers on both sides.

Regarding the foregoing pole assembly 30, the pole assembly 30 is disposed at the first through hole 121a of the second top wall 121 and is electrically connected to another end of the first tab 51. When the electrochemical apparatus is electrically connected to a load of the electric apparatus, electric energy can be sequentially output to the load through the first tab 51, the pole assembly 30, and the circuit board 40. When the electrochemical apparatus is electrically connected to the power supply apparatus, the electric energy can be input to the electrode assembly 20 through the circuit board 40, the pole assembly 30, and the first tab 51.

Still refer to the example shown in FIG. 3. In some embodiments of this application, the pole assembly 30 includes a pole 31, a connecting member 32, and an adhesive layer 33 sandwiched between the pole 31 and the connecting member 32. A cross section of the pole 31 is generally T-shaped and the pole 31 can be made of a conductive metal material such as aluminum or aluminum alloy. Specifically, the pole 31 is provided with a first end portion (not shown) and a connecting portion (not shown) integrally formed with the first end portion. The first end portion is exposed on the second top wall 121 of the first protruding portion 12 and is electrically connected to the circuit board 40 accommodated within the accommodating space of the housing 10. The first end portion is connected to the connecting member 32 via the adhesive layer 33 to form an integral structure. In this way, the pole assembly 30 can be a universal component suitable for different sizes of electrochemical apparatuses. The connecting member 32 is adhered, glued, welded, or coupled to surface of the second top wall 121 away from the second cavity 12a to achieve an airtight seal therebetween. The connecting portion extends from a middle portion of the first end portion through the adhesive layer 33, the connecting member 32, and the first through hole 121a of the second top wall 121, and then extends into the second cavity 12a to electrically connect to another end of the first tab 51. It should be noted that since the housing 10 is electrically connected to the second electrode plate of the electrode assembly 20 through the second tab 52, the pole 31 is electrically connected to the first electrode plate of the electrode assembly 20 through the first tab 51. In other words, the housing 10 and the pole 31 have opposite polarities. Considering improvement of an angle between the housing 10 and the pole 31 to prevent short circuits, the pole 31 and the housing 10 need to be electrically insulated. Therefore, the connecting portion of the pole 31 needs to maintain a gap with the housing 10, and either the connecting member 32 or the adhesive layer 33 needs to be made of an electrical insulation material. For example, when the adhesive layer 33 is formed by curing a non-conductive sealing adhesive, the connecting member 32 can be made of a metal material and is welded to the second top wall 121 of the second protruding portion 13. Alternatively, when the adhesive layer 33 is formed by curing a conductive sealing adhesive, the connecting member 32 can be made of a non-metal material and is adhered to the second top wall 121 of the second protruding portion 13.

Further, when viewed along a direction (third direction D) from the outside of the first protruding portion 12 to the second cavity 12a of the first protruding portion 12 of the housing 10, outer diameters of the first end portion of the pole 31, the adhesive layer 33, and the connecting member 32 increase successively and they form a stepped distribution as a whole. The advantage of this arrangement is that, on the one hand, the first end portion of the pole 31 has a larger contact area compared to the connecting portion, making it convenient to externally connect to the first end portion of the pole 31. On the other hand, the area of the adhesive layer 33 is larger than the first end portion of the pole 31 but smaller than the area of the connecting member 32, or the first end portion of the pole 31 is separated from the connecting member 32 via the adhesive layer 33, thereby alleviating the situation where the circuit board 40 may be short-circuited with the connecting member 32 when the electrochemical apparatus is electrically connected to the circuit board 40. In addition, the contact area between the connecting member 32 and the second top wall 121 of the first protruding portion 12 can be larger, making it easier to fix the pole assembly 30 to the second top wall 121 while alleviating occurrence of electrolyte leakage within the housing 10 from the gap between the connecting member 32 and the second top wall 121.

Certainly, a specific structure of the pole assembly 30 is not limited to this. For example, in some other embodiments of this application, the pole assembly 30 may include only the pole 31 in the foregoing structure. In this case, the first end portion of the pole 31 can be adhered or glued to surface of the second top wall 121 away from the second cavity 12a via an insulating sealing adhesive or an adhesive member, allowing the connecting portion to extend from the middle portion of the first end portion through the first through hole 121a of the second top wall 121 and into the second cavity 12a to electrically connect to another end of the first tab 51. In addition, if the second tab 52 with an opposite polarity extends outside the housing 10 after insulation treatment to connect to the load, the first end portion of the pole 31 can further be welded or coupled to the surface of the second top wall 121 away from the second cavity 12a.

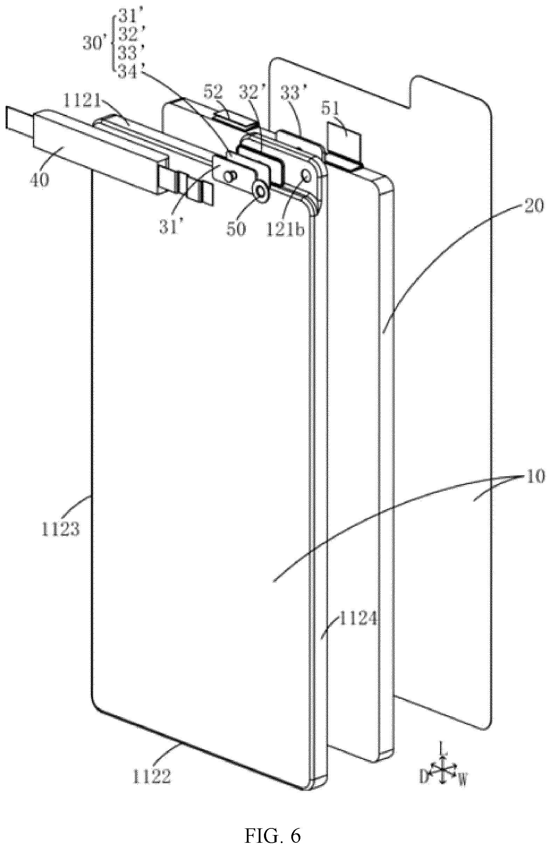

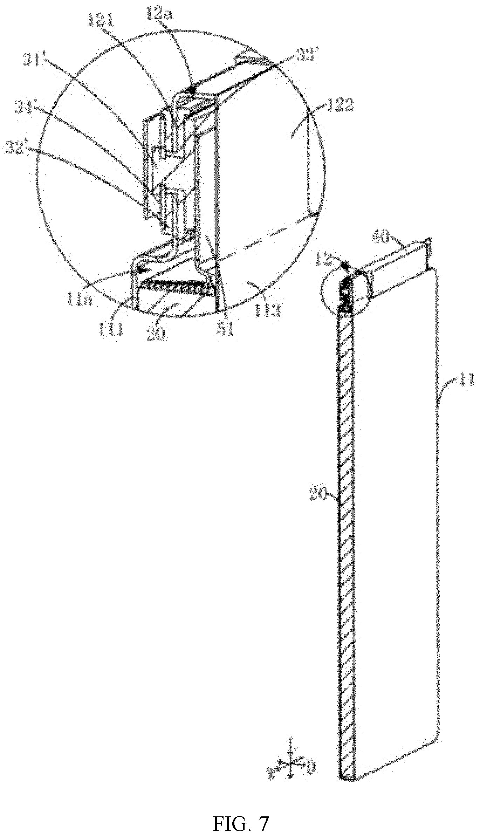

It can still be understood that the pole assembly 30 can be riveted to the first through hole 121a of the second top wall 121 using a riveting device. As shown in FIG. 5 to FIG. 7, in some other embodiments of this application, a pole assembly 30' differs from the foregoing pole assembly 30 in that the pole assembly 30' can further include a first insulation gasket 32' and a second insulation gasket 33' in addition to the pole 31'. A cross section of the pole 31' is generally H-shaped and the pole 31' can be made of a conductive metal material such as aluminum or aluminum alloy. Specifically, the pole 31' is provided with a first end portion (not shown), a second end portion (not shown), and a connecting portion (not shown) integrally connected to the first end portion and the second end portion, respectively. The first end portion is exposed on the second top wall 121 of the first protruding portion and is electrically connected to the circuit board accommodated within the housing 10, and the second end portion is located within the second cavity 12a and is electrically connected to another end of the first tab 51. The first insulation gasket 32' is sandwiched between the first end portion and the surface of the second top wall facing outside of the housing 10. A portion of the first insulation gasket 32' extends into the second cavity 12a from the first through hole 121a, and the connecting portion can run through this portion of the first insulation gasket 32' to achieve an interference fit between this portion of the first insulation gasket 32' and the circumferential wall of the first through hole 121a under the support of the connecting portion. The second insulation gasket 33' is sandwiched between the second end portion and the surface of the second top wall 121 facing the second cavity 12a, and under a clamping action of the second end portion and the first end portion, the second insulation gasket 33', surface of the second top wall 121 facing the second cavity 12a, and the end surface of the first insulation gasket 32' extending into the second cavity 12a are tightly fitted together. Compared to fixing the pole 31' to the first protruding portion 12 by adhering or welding, riveting enhances connection strength between the pole 31' and the first protruding portion 12, thereby strengthening a stress weak point at the second through hole 121b of the housing and enhancing the mechanical reliability and stability of the electrochemical apparatus. Further, a metal gasket 34' is provided between the first end portion and the first insulation gasket 32' to disperse pressure of the pole 31' on the first insulation gasket 32', thereby reducing a failure rate of the riveting of the pole assembly 30'.

In order to prevent short circuits between the first tab 51 and the housing 10, especially at the end of the tab connected to the pole 31 of the pole assembly 30, a first insulation member 61, such as an insulating paper, is provided between the inner wall surface of the second top wall 121 where the pole 31 is located and the first tab 51; and a second insulation member 62, such as an insulating paper, is provided between the inner wall surface of the second bottom wall 122 where the pole 31 is located and the first tab 51 to prevent electrical contact between the first tab 51 and the first protruding portion 12 of opposite polarity.

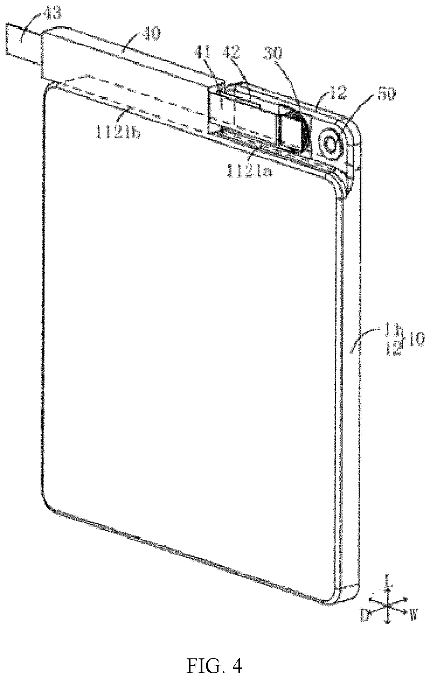

Regarding the foregoing circuit board 40, refer to the example shown in FIG. 1 and FIG. 4. In some embodiments of this application, the circuit board 40 is generally of a flat rectangular shape. A longer and thinner end of the circuit board 40 can be fixed to the first side wall 1121 of the housing 10 using an adhesive member or a structure such as a snap-fit, allowing the circuit board 40 to be accommodated within the accommodating space of the housing 10 in a manner that reduces thickness of the electrochemical apparatus. Further, in order to reduce space occupied by the electrochemical apparatus, a first electrical connection portion 41 connecting the circuit board 40 and the pole 31 of the pole assembly 30 and a second electrical connection portion 42 connecting the circuit board 40 and the housing 10 are configured in such a way that a side closer to the first protruding portion 12 extends out of the circuit board 40, while a third electrical connection portion 43 for connecting the circuit board 40 to the outside is configured in such a way that a side farther away from the first protruding portion 12 extends out of the circuit board 40. This configuration not only saves space in a height direction of the electrochemical apparatus but also provides better drop resistance performance when the electrochemical apparatus is subjected to impact or shock due to the staggered arrangement of the connection points between the circuit board 40 and the housing 10 and the connection points between the circuit board 40 and the pole assembly 30. Certainly, the second electrical connection portion 42 of the circuit board 40 can be connected to any outer surface of the housing 10 and is not limited to this.

In summary, the electrochemical apparatus provided in some embodiments of this application includes a first protruding portion 12 partially formed on the first side wall 1121 of the main body 11. Since the first protruding portion 12 protrudes from the main body 11 along the second direction L, the first protruding portion 12 occupies packaging space of the electric apparatus in the second direction L. The circuit board 40 is installed within the accommodating space formed by the first protruding portion 12 and the first side wall 1121, so that the space occupied by the first protruding portion 12 is effectively utilized by the circuit board 40, thereby reducing the space occupied by the electric apparatus in the second direction L and the third direction D. As a result, subsequent designs of the electric apparatus no longer need to make avoidance for the portion where the pole 31 is located, thereby improving the space utilization of the electrochemical apparatus.

It should be noted in addition that when the electrochemical apparatus is a thin-type electrochemical apparatus, as shown in FIG. 1, thickness (a distance between two ends of the main body 11 in the third direction D) of the main body 11 is greater than or equal to 1 mm and less than 3 mm, for example, a total thickness of 1.8 mm, 1.7 mm, 1.6 mm, or 1.5 mm. Thickness D1 (a distance between the two ends of the first protruding portion in the third direction D) of the first protruding portion 12 may be 1 mm to 3 mm, or more specifically, 1 mm to 1.5 mm, to meet the requirement that total thickness of the connecting portion between the first protruding portion 12 and the circuit board 40 is less than or equal to the total thickness of the main body 11. Other structural parameters of the first protruding portion 12, such as width and length should also be determined based on the width and length of the circuit board 40. For example, length L1 (a distance between the two ends of the first protruding portion in the second direction L1) of the first protruding portion may be 3 mm to 6 mm, or more specifically, 4 mm to 5.5 mm. A width W1 of the first protruding portion 12 (a distance between the two ends of the first protruding portion in the first direction W) may be 3 mm to 25 mm, allowing for opening the first through hole 121a and the second through hole 121b without compromising the structural strength of the first protruding portion 12.

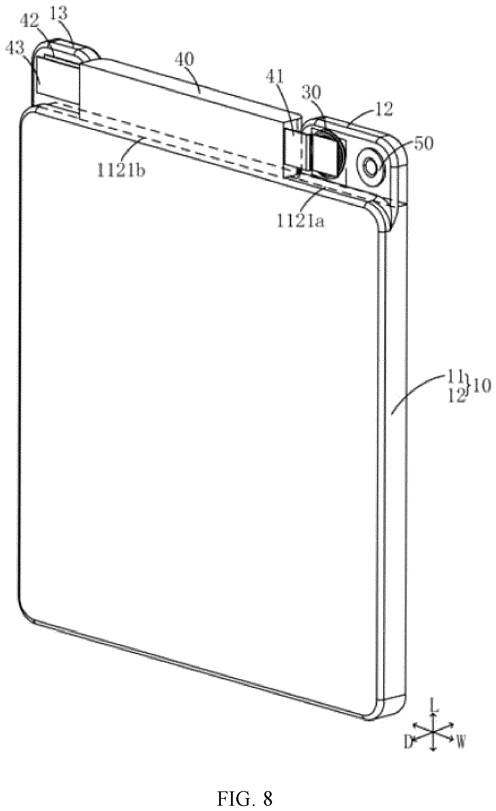

In order to improve the drop resistance performance of the electrochemical apparatus, especially along the first direction W where one end of the circuit board 40 is not protected by the first protruding portion 12, as shown in FIG. 8, in some other embodiments of this application, the first side wall 1121 of the main body 11 further extends to form a second protruding portion 13. A specific structure of the second protruding portion 13 is similar to that of the first protruding portion 12 and can be referred to the description of the first protruding portion 12, and is not repeated here. Along the first direction W, the first protruding portion 12 is located at one end of the first side wall 1121, and the second protruding portion 13 is located at another end of the first side wall 1121. The first protruding portion 12 and the second protruding portion 13 jointly enclose an accommodating space for accommodating the circuit board 40. The third electrical connection portion 43 for external connections of the circuit board 40 can be configured to be fixed to the second protruding portion 13 and insulated from the second protruding portion 13. As a result, the connection area between the circuit board 40 and the housing 10 is further increased, and the two ends of the circuit board 40 are respectively protected by the first protruding portion 12 and the second protruding portion 13, thereby improving the drop resistance performance of the electrochemical apparatus in the third direction D. Further, the blank current collector of each second electrode plate can be configured to be located near one end of the second protruding portion 13. The blank current collector of each second electrode plate extends from one end of the laminated structure adj acent to the first side wall 1121 of the main body 11 to the outside and is electrically connected to one end of the second tab 52, and another end of the second tab 52 is bent and then spot-welded, laser welded, or ultrasonically welded to the first side wall 1121 of the housing 10. In addition, the second electrical connection portion 42 of the circuit board 40 can be configured to be fixed to the second protruding portion 13.

Based on the same inventive concept, this application further provides an electric apparatus. The electric apparatus includes the electrochemical apparatus of any of the foregoing embodiments and a load powered by the electrochemical apparatus. In this embodiment, the electric apparatus includes a mobile phone. It can be understood that, in other embodiments of this application, the electric apparatus may alternatively be a tablet computer, a computer, a drone, and other apparatus driven by electricity.

The foregoing descriptions are merely some embodiments of this application, but are not intended to limit the patent scope of this application. Any equivalent structural or process transformation made by using the content of the specification and accompanying drawings of this application, or direct or indirect application in other related technical fields shall all fall within the patent protection scope of this application in the same way.

## Claims

1. An electrochemical apparatus, comprising a housing, an electrode assembly, a first tab, and a pole assembly, wherein the housing comprises a main body and a first protruding portion, the main body is provided with a first cavity, the first protruding portion is provided with a second cavity and a first through hole, the first through hole and the first cavity both communicate with the second cavity, the pole assembly is disposed in the first through hole, the pole assembly is insulated from the housing, the electrode assembly is accommodated in the first cavity, one end of the first tab is connected to the electrode assembly, and another end of the first tab extends into the second cavity and is connected to the pole assembly, wherein
the main body comprises a first top wall, and the first protruding portion comprises a second top wall, wherein the first top wall protrudes from the second top wall, and the first through hole is provided in the second top wall.

2. The electrochemical apparatus according to claim 1, wherein the first protruding portion satisfies at least one of the following conditions:
(1) a distance between two ends of the first protruding portion in a thickness direction of the main body is 1.00 mm to 3.00 mm;
(2) a distance between two ends of the first protruding portion in a width direction of the main body is 3 mm to 25 mm; or
(3) a distance between two ends of the first protruding portion in a length direction of the main body is 3 mm to 6 mm.

3. The electrochemical apparatus according to claim 1, wherein the main body further comprises a first bottom wall, and along a thickness direction of the main body, the first bottom wall is disposed opposite the first top wall; and
the first protruding portion further comprises a second bottom wall, and along the thickness direction of the main body, the second bottom wall is disposed opposite the second top wall, and the second bottom wall is flush with the first bottom wall.

4. The electrochemical apparatus according to claim 1, wherein a first side wall of the housing comprises a first zone and a second zone, the first side wall extends along a length direction of the main body to form the first protruding portion, and the first protruding portion and the second zone form an accommodating space; and
the electrochemical apparatus further comprises a circuit board, wherein the circuit board is fixed in the accommodating space, and the circuit board is provided with a first electrical connection portion configured in such a way that a side of the first electrical connection portion closer to the first protruding portion extends out of the circuit board, wherein the first electrical connection portion is electrically connected to the pole assembly, and the first electrical connection portion is arranged between the first top wall and the second top wall.

5. The electrochemical apparatus according to claim 4, wherein the circuit board is provided with a second electrical connection portion, and the electrochemical apparatus further comprises a second tab, wherein one end of the second tab is electrically connected to the electrode assembly, another end of the second tab and the second electrical connection portion are both electrically connected to the housing.

6. The electrochemical apparatus according to claim 5, wherein the second electrical connection portion is electrically connected to an outer surface of the first protruding portion, and a connection point between the first protruding portion and the second electrical connection portion and the first through hole are located on a same side of the first protruding portion.

7. The electrochemical apparatus according to claim 4, wherein a second protruding portion also extends along the length direction of the main body from the second zone, and along a width direction of the main body, the first protruding portion and the second protruding portion are located at two ends of the first side wall, and the circuit board is located between the first protruding portion and the second protruding portion.

8. The electrochemical apparatus according to claim 4, wherein the pole assembly comprises a pole, a connecting member, and an adhesive layer sandwiched between the pole and the connecting member, wherein the connecting member is fixed to the first protruding portion, the pole is provided with a first end portion and a connecting portion, wherein the first end portion is located outside the first protruding portion, the first end portion is electrically connected to the circuit board, one end of the connecting portion is connected to the first end portion, another end of the connecting portion sequentially runs through the adhesive layer, the connecting member, and the first through hole to connect to another end of the first tab, and there is a gap between an outer periphery of the connecting portion and wall surface of the first through hole.

9. The electrochemical apparatus according to claim 4, wherein the pole assembly comprises a pole, a first insulation gasket, and a second insulation gasket, wherein the pole is provided with a first end portion, a connecting portion, and a second end portion, the first end portion is located outside the first protruding portion and is electrically connected to the circuit board, the second end portion is located inside the second cavity and is electrically connected to the electrode assembly, and the connecting portion runs through the first through hole and is connected to the first end portion and the second end portion; and under a contraction effect of the first end portion and the second end portion, the first insulation gasket is sandwiched between the first end portion and the first protruding portion, and the second insulation gasket is sandwiched between the second end portion and the second protruding portion, wherein the first insulation gasket insulates the first protruding portion from the connecting portion.

10. The electrochemical apparatus according to claim 9, wherein the pole assembly further comprises a metal gasket, wherein the metal gasket is sandwiched between the first end portion and the first insulation gasket.

11. The electrochemical apparatus according to claim 1, wherein the electrochemical apparatus further comprises a first insulation member and a second insulation member, wherein the first insulation member and the second insulation member are both provided on inner wall surface of the first protruding portion; and
along a thickness direction of the electrochemical apparatus, the first tab is located between the second insulation member and the first insulation member.

12. The electrochemical apparatus according to any one of claims 1 to 11, wherein the first protruding portion is further provided with a second through hole, and the second through hole communicates with the second cavity; and
the electrochemical apparatus further comprises an injection plug, and the injection plug is provided in the second through hole.

13. An electric apparatus, wherein the electronic apparatus comprises the electrochemical apparatus according to any one of claims 1 to 12.
